# EUROPEAN PATENT SPECIFICATION

(11) **EP 4 524 678 B1**
(45) Date of publication and mention of the grant of the patent: **13.05.2026**
(21) Application number: 24199627.1
(22) Date of filing: 11.09.2024
(51) Int. Cl.: G05D 1/229, G01C 21/00, G05D 1/622, G05D 1/644, G05D 101/15, G05D 109/10, G01C 21/34

(54) **ROBOT LOCAL PLANNER SELECTION**
AUSWAHL EINES LOKALEN ROBOTERPLANERS
SÉLECTION DE PLANIFICATEUR LOCAL DE ROBOT

(30) Priority: 14.09.2023 US 202318467107
(43) Date of publication of application: 19.03.2025
(73) Proprietor: Nokia Solutions and Networks Oy, 02610 Espoo (FI)
(72) Inventor: ANDREWS, Daniel, Chatham, NJ (US); LEE, Jeongran, Basking Ridge, NJ (US); SHARMA, Vishnu, College Park, MD (US)
(74) Representative: Nokia EPO representatives

(56) References cited:
- US-A1- 2020 216 094
- US-A1- 2023 053 964
- SOOD SHIVAM ET AL: "Multiple Waypoint Navigation in Unknown Indoor Environments", 2022 4TH INTERNATIONAL CONFERENCE ON CONTROL AND ROBOTICS (ICCR), IEEE, 2 December 2022 (2022-12-02), pages 1 - 10, XP034304495, DOI: 10.1109/ICCR55715.2022.10053921

## Description

### TECHNICAL FIELD

One or more example embodiments relate to autonomous robot control.

### BACKGROUND

The Robot Operating System (ROS) is the most popular framework for robot control. In ROS, navigation has two main components, the global planner and the local planner. Classical (or traditional) and learning-based approaches lie at the extremes of local planners for mobile robots. While classical planners are more robust and stable, learning-based planners can be more efficient in challenging situations.

### SUMMARY

The scope of protection sought for various example embodiments is set out by the independent claims. The example embodiments and/or features, if any, described in this specification that do not fall under the scope of the independent claims are to be interpreted as examples useful for understanding various embodiments.

At least one example embodiment provides a mobile robot configured to dynamically determine to use a traditional local planner or a reinforcement learning local planner according to current nearby obstacles.

At least one example embodiment provides a method for navigating a robot, the method including generating a set of next consecutive waypoints, determining a local planner based on the set of next consecutive waypoints, and outputting a velocity pair for navigating the robot, based on the determined local planner.

According to at least one example embodiment, the method further includes generating a local cost map. The determining the local planner is further based on the local cost map.

According to at least one example embodiment, the method further includes determining a plurality of path clearance statuses based on the set of next consecutive waypoints, and filtering the plurality of path clearance statuses. The determining the local planner is based on the filtered path clearance statuses.

According to at least one example embodiment, the determining the local planner includes determining whether to use a traditional local planner or a reinforcement learning (RL) local planner.

According to at least one example embodiment, the determining the local planner includes determining to use a traditional local planner in response to all consecutive waypoints in the set of next consecutive waypoints being clear, and determining to use a reinforcement learning (RL) local planner in response to at least one consecutive waypoint in the set of next consecutive waypoints not being clear.

According to at least one example embodiment, the method further includes generating an approximate path based on a global path and the set of next consecutive waypoints, and determining whether all consecutive waypoints in the set of next consecutive waypoints are clear in response to no waypoint in the set of next consecutive waypoints being in a same position as an obstacle, based on a local cost map.

According to at least one example embodiment, the generating the set of next consecutive waypoints includes discretizing a global path to generate discrete waypoints, and choosing, as the set of next consecutive waypoints, a number of next discrete waypoints from a current position of the robot on the global path.

According to at least one example embodiment, the choosing includes determining, among the discrete waypoints, a first waypoint, after a closest waypoint to the current position of the robot. The choosing chooses the number of next discrete waypoints starting from the first waypoint.

At least one example embodiment provides a mobile robot including at least one processor, and at least one memory storing instructions that, when executed by the at least one processor, cause the mobile robot to generate a set of next consecutive waypoints, determine a local planner based on the set of next consecutive waypoints, and output a velocity pair for navigating the mobile robot, based on the determined local planner.

According to at least one example embodiment, the at least one memory stores instructions that, when executed by the at least one processor, cause the mobile robot to generate a local cost map, and determine the local planner further based on the local cost map.

According to at least one example embodiment, the at least one memory stores instructions that, when executed by the at least one processor, cause the mobile robot to determine a plurality of path clearance statuses based on the set of next consecutive waypoints, filter the plurality of path clearance statuses, and determine the local planner based on the filtered path clearance statuses.

According to at least one example embodiment, the at least one memory stores instructions that, when executed by the at least one processor, cause the mobile robot to determine whether to use a traditional local planner or a reinforcement learning (RL) local planner.

According to at least one example embodiment, the at least one memory stores instructions that, when executed by the at least one processor, cause the mobile robot to determine to use a traditional local planner in response to all consecutive waypoints in the set of next consecutive waypoints being clear, and determine to use a reinforcement learning (RL) local planner in response to at least one consecutive waypoint in the set of next consecutive waypoints not being clear.

According to at least one example embodiment, the at least one memory stores instructions that, when executed by the at least one processor, cause the mobile robot to generate an approximate path based on a global path and the next consecutive waypoints, and determine whether all consecutive waypoints in the set of next consecutive waypoints are clear in response to no waypoint in the set of next consecutive waypoints being in a same position as an obstacle, based on a local cost map.

According to at least one example embodiment, the at least one memory stores instructions that, when executed by the at least one processor, cause the mobile robot to discretize a global path to generate discrete waypoints, and choose, as the set of next consecutive waypoints, a number of next discrete waypoints from a current position of the robot on the global path.

According to at least one example embodiment, the at least one memory stores instructions that, when executed by the at least one processor, cause the mobile robot to determine, among the discrete waypoints, a first waypoint, after a closest waypoint to the current position of the robot, and choose the number of next discrete waypoints starting from the first waypoint.

At least one example embodiment provides a non-transitory computer readable storage medium storing computer executable instructions that, when executed at a mobile robot, cause the mobile robot to perform a method for navigating the mobile robot, the method including generating a set of next consecutive waypoints, determining a local planner based on the set of next consecutive waypoints, and outputting a velocity pair for navigating the robot, based on the determined local planner.

According to at least one example embodiment, the method further includes generating a local cost map. The determining the local planner is further based on the local cost map.

According to at least one example embodiment, the determining the local planner includes determining whether to use a traditional local planner or a reinforcement learning (RL) local planner.

According to at least one example embodiment the determining the local planner includes determining to use a traditional local planner in response to all consecutive waypoints in the set of next consecutive waypoints being clear, and determining to use a reinforcement learning (RL) local planner in response to at least one consecutive waypoint in the set of next consecutive waypoints not being clear.

At least one example embodiment provides a mobile robot including at least one processor, and at least one memory storing instructions that, when executed by the at least one processor, cause the mobile robot to navigate based on a received velocity pair, the received velocity pair based on a local planner for the mobile robot, the local planner being determined based on a set of next consecutive waypoints for the mobile robot.

At least one example embodiment provides a mobile robot including a means for generating a set of next consecutive waypoints, a means for determining a local planner based on the set of next consecutive waypoints, and a means for outputting a velocity pair for navigating the robot, based on the determined local planner.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.
FIG. 1 is a block diagram illustrating a system according to example embodiments.
FIG. 2 is a flowchart illustrating a method according to example embodiments.
FIG. 3 is a flowchart illustrating a method according to example embodiments.
FIG. 4A is an example of a global cost map according to example embodiments.
FIG. 4B is an example of a local cost map according to example embodiments.
FIGS. 5A and 5B illustrate approximate paths according to example embodiments.
FIG. 6A illustrates a clear approximate path according to example embodiments.
FIG. 6B illustrates a blocked approximate path according to example embodiments.
FIG. 7 is a flowchart illustrating a method according to example embodiments.
FIG. 8 illustrates a table showing possible results of a local cost map filter according to example embodiments.
FIG. 9A illustrates a clear approximate path using a weighted-box based method according to example embodiments.
FIG. 9B illustrates a blocked approximate path using a weighted-box based method according to example embodiments.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

As discussed herein the terminology "one or more" and "at least one" may be used interchangeably.

Planning is a fundamental part of any mobile robot setup. A mobile robot must plan a path to successfully move from one location to another. Existing planning approaches can be broadly categorized into global planners and local planners which are typically deployed in concert.

In a known map, global planners are optimal as they utilize the global cost map, but are brittle in the presence of unknown obstacles such as dynamic objects.

Local planners, though often suboptimal, can react well in such situations. Additionally, local planners are more computationally efficient as the time to search a global map increases with the map size.

In modern planner implementations, both local and global planners are used in conjunction where the global planner runs at a slower speed and computes a path to the destination on a global cost map. The local planner converts this path into near-term target waypoints and runs at a faster speed to react timely to any unexpected obstacle.

The global planner computes a path from the robot start to a goal location (e.g., a global plan or a global path), based on a known map of fixed obstacles. For example, the global planner may generate a global cost map based on the known map of fixed obstacles and compute the global plan for the robot based on the global cost map.

Local planners, on the other hand, consider a local area near the robot and find feasible paths or controls for making progress toward the goal. The job of the local planner is to follow the global plan as closely as possible, while avoiding unexpected obstacles (e.g. a pedestrian walking on the global plan).

Local planners may be categorized as traditional (e.g., classic) local planners or artificial intelligence (AI) local planners.

Traditional local planners, which do not include learning, are widely used across robotics applications. Reactive replanning, artificial potential field, and fuzzy logic based-planners are some examples of types of local planners. Dynamic window approach (DWA) is the most popular among them, and is the canonical local planner used by Robot Operating System (ROS).

DWA looks for good velocity candidates in the local region around the robot and identifies the best choice among them using a scoring function. DWA uses a simple motion model for the robot and therefore may not work well in situations where a more complex local trajectory is more suitable. Sometimes this issue can be resolved by parameter tuning, which can be cumbersome as DWA depends on a relatively large set of parameters.

DWA first generates some admissible translational and rotational velocity pairs in a local window and performs forward simulation for them. The method optimizes an objective function consisting of progress towards the goal, clearance on the path, and the velocity of the robot to search for the most suitable velocity pair. The selected pair is used for a fixed amount of time and the search process is run again until the robot reaches within a threshold and/or pre-defined distance of the goal.

DWA considers the robot's kinematics and results in a relatively smooth circular trajectory for the robot at each step. However, DWA is not able to respond well in situations when a more complex velocity profile is needed. As it is infeasible to search over all possible velocity pairs, only some sampled pairs are used in practice. This could result in the robot choosing a trajectory that could collide with an unexpected obstacle. A more intricate velocity profile could be achieved by multi-step forward simulation, but this would result in an exponential increase in the runtime, and a relatively large set of hyperparameters would require some tuning effort before the robot can be deployed in the field.

When discussing traditional local planners herein, DWA will be discussed for simplicity. However, it should be understood that any known traditional local planner may be used.

AI local planners learn a system model using data and fine-tune the learning model in a new environment. A deep reinforcement learning (RL) framework is often used for training in such approaches as it allows the robot to interact with the environment without needing data collection and annotation. When compared with traditional local planners, RL local planners may provide a more responsive, but slower and jerky motion of the robot as it tries to move cautiously even when the path ahead is clear. As discussed herein, the terms AI and RL may be used interchangeably.

An example of a RL local planner is Soft Actor Critic Planner (SACPlanner). SACPlanner uses a neural network to take a polar representation of the local cost map as the input and outputs a rotation and translation velocity pair as the action for the robot.

A RL local planner effectively retains a mapping between the input and the output as network weights. This results in SACPlanner potentially learning how to behave in a conservative fashion to safely avoid the obstacles ahead. Hence, while DWA is limited to executing motion on circular arcs, SACPlanner can traverse complex trajectories. However, as SACPlanner looks at the cost map in an instant only, the robot motion is jerky and it moves at a slower speed, making it inefficient even when there is no obstacle ahead.

When discussing AI local planners herein, SACPlanner will be discussed for simplicity. However, it should be understood that any known AI local planner may be used.

These two planners represent two seemingly contrasting planning approaches. Choosing one planner from these is essentially a tradeoff between smoothness and responsiveness. While DWA is more suitable for moving on a static map, SACPlanner is better equipped for successful navigation in complex maps.

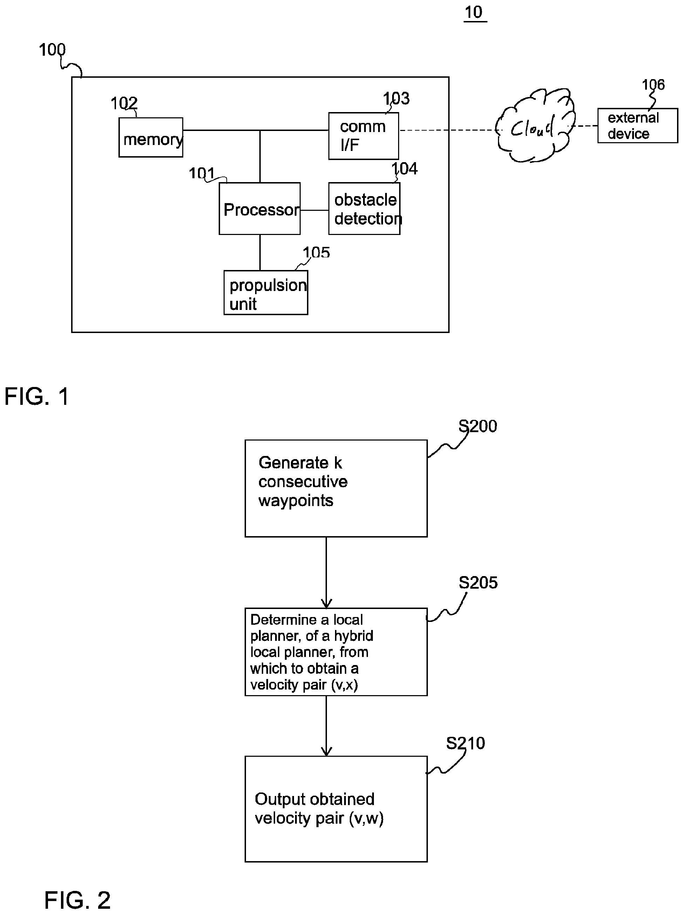

FIG. 1 is a block diagram illustrating an example embodiment of a system according to example embodiments. The system 10 includes a robot 100 and/or an external device 106. The robot 100 may communicate with the external device 106, for example, over the cloud. (e.g., via the Internet). The robot 100 may also be referred to as a drone, a mobile robot, ground robot, navigation robot, etc. For example, the robot 100 may be a warehouse sorting robot, an autonomous shopping cart, an autonomous guided vehicle (AGV), an autonomous mobile robot (AMR), an autonomous storage and retrieval system (AS/RS), etc.

Referring to FIG. 1, the robot 100 may include processing circuitry (such as at least one processor 101), a memory 102, a wireless communication interface 103, an obstacle detection unit 104, and/or a propulsion unit 105. The memory 101 may include various special purpose program code including computer executable instructions which may cause the robot 100 to perform the one or more methods according to example embodiments. The communication interface 103 may be a wireless communication interface or a wired communication interface. For example, the communication interface 103 may be an ethernet interface, LTE, 5G, 6G, and/or a WiFi interface, etc. The obstacle detection unit 104 may detect and/or determine the presence of obstacles near the robot 100. The obstacle detection unit 104 may include, for example, odometry sensor(s), an inertial measurement unit (IMU), radar, lidar, sonar, and/or digital camera(s), etc. The propulsion unit 105 may include, for example, wheels and/or tracks, etc., at least one motor and/or engine, and/or servos, etc.

In at least one example embodiment, the processing circuitry may include at least one processor (and/or processor cores, distributed processors, networked processors, etc.), such as the at least one processor 101, which may be configured to control one or more elements of the robot 100, and thereby cause the robot 100 to perform various operations. The processing circuitry (e.g., the at least one processor 101, etc.) is configured to execute processes by retrieving program code (e.g., computer readable instructions) and data from the memory 102 to process them, thereby executing special purpose control and functions of the entire robot 100. Once the special purpose program instructions are loaded into, (e.g., the at least one processor 101, etc.), the at least one processor 101 executes the special purpose program instructions, thereby transforming the at least one processor 101 into a special purpose processor.

In at least one example embodiment, the memory 102 may be a non-transitory computer-readable storage medium and may include a random access memory (RAM), a read only memory (ROM), and/or a permanent mass storage device such as a disk drive, or a solid state drive. Stored in the memory 102 is program code (i.e., computer readable instructions) related to operating the robot 100.

FIG. 2 is a flowchart illustrating a method according to example embodiments. The method shown in FIG. 2 may be performed at the robot 100 to navigate the robot 100.

Referring to FIG. 2, at S200 the robot 100 generates a set of k consecutive waypoints W. In this example, k may be any natural number. According to some example embodiments, k may be equal to 8. However, example embodiments are not limited thereto.

The robot 100 may generate the set of k consecutive waypoints based on a global cost map and/or a global path. The global cost map and/or the global path may be generated by a global planner based on a known map of fixed obstacles. The global planner may be executed by the robot 100, or by the external device 106. In a case where the global planner is executed by the external device 106, the global cost map and/or the global path map may be transmitted to the robot 100 via the communication interface. The global cost map and/or the global path may be stored in the memory 102.

The robot 100 may generate waypoints W based on the global cost map and/or the global path. An algorithm for generating the waypoints may be similar to a waypoint generation algorithm typically associated with RL local planners. For example, the waypoints may be generated according to the method disclosed in R. Güldenring, "Applying deep reinforcement learning in the navigation of mobile robots in static and dynamic environments," 2019, the contents of which are incorporated herein by reference. However, example embodiments are not limited thereto and any known method for generating the waypoints may be used.

For example, according to some example embodiments, the robot 100 may discretize the global path starting from the robot's current position to generate the set of k waypoints W. In one example, the robot may choose the set of k waypoints W from the discrete waypoints on the global path as the set of next k waypoints W (or next set of k waypoints W).

In some other example embodiments, the robot 100 may discretize the entire global path into a set of global waypoints. For example, the set of global waypoints may be discretized to be a constant distance apart (equidistant). Alternatively, the discretized global waypoints may be stored in the memory 102 and/or received from the external device 106 via the communication interface 103.

At any given time, the robot 100 may pick a next set of k waypoints W, from the set of global waypoints. The first waypoint in the next set may be the waypoint after the closest waypoint to the current position of the robot 100. This may avoid a situation where the first waypoint is behind the robot 100 on the global path. The robot then picks k consecutive waypoints, starting with this first waypoint.

Returning to FIG. 2, at S205 the robot 100 determines which local planner, of a hybrid local planner, to obtain a velocity pair (v,w) from.

The velocity pair (v,w) may be used for navigating (e.g., moving) the robot. The velocity pair (v,w) includes a linear (or translational) velocity (v) and an angular (or rotational) velocity (w). The hybrid local planner may include at least two local planners. For example, the hybrid local planner may include a traditional planner (e.g., DWA) and a RL local planner (e.g., SACPlanner). The at least two local planners of the hybrid local planner may each output velocity pairs continuously or periodically, according to some example embodiments. Alternatively, a respective local planner of the at least two local planners may output a velocity pair (v,w) only in response to the decision to obtain the velocity pair from the respective local planner.

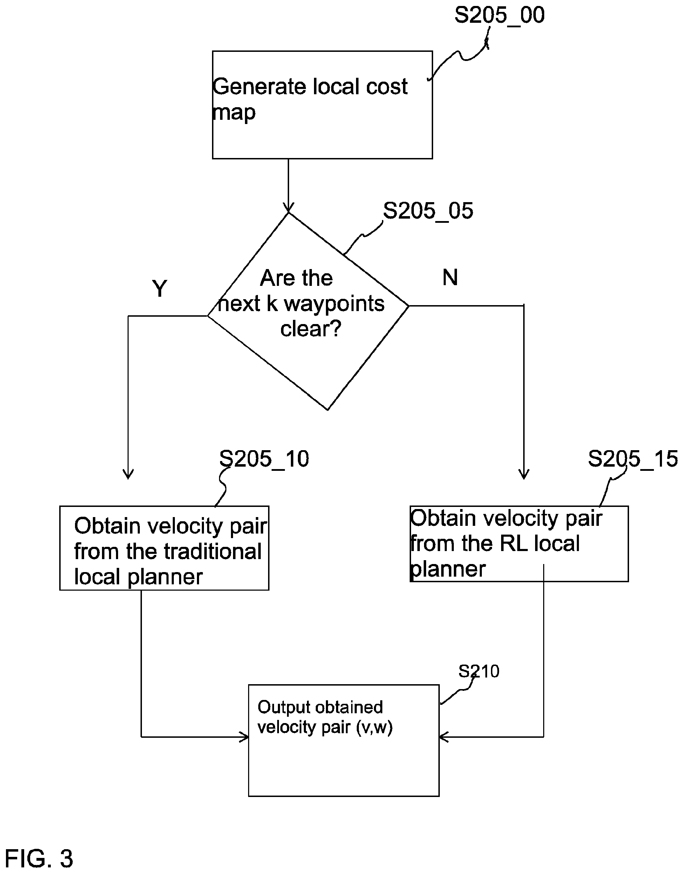

Returning to S205, the robot 100 determines a local cost map via the obstacle detection unit 104. Determining the local cost map will be explained in more detail with regard to FIG. 3.

Based on the local cost map and the next set of k waypoints W, the robot 100 determines whether to use a traditional local planner (e.g., DWA) or a RL local planner (e.g., SACPlanner). For example, the robot 100 may determine to use the traditional local planner if none of the k waypoints W corresponds with an obstacle and may determine to use the RL local planner if any of the k waypoints W corresponds with an obstacle.

Therefore, in a situation where more responsiveness is needed to avoid an obstacle, the robot 100 uses the RL local planner and in a situation where the path is clear the robot 100 uses the traditional local planner resulting in a smoother path. Step S205 will be described in more detail later with regard to FIG. 3.

In some example embodiments, S205 may be performed by the external device 106. In this case, the robot 100 determines the local cost map via the obstacle detection unit 104. The robot 100 may then transmit the local cost map to the external device 106 via the communication interface 103. The external device 106 may perform S205, and transmit the determination to the robot 100 via the communication interface 103. In another example embodiment, the robot 100 transmits lidar values received from the obstacle detection unit 104, to the external device 106. In this case, the external device 106 determines the local cost map. Determining the local cost map will be explained in more detail with regard to FIG. 3.

Returning to FIG. 2, at S210 the robot 100 outputs the obtained a velocity pair (v,w) from the determined local planner. The local planner for the robot 100 determines the linear (or translational) velocity (v) and the angular (or rotational) velocity (w) at every time instant. The robot 100 uses the determined local planner to determine the velocity pair and then instructs the propulsion unit 105 to control the motion of the robot 100 according to the velocity pair (v,w).

DWA calculates which velocity pairs (v,w) are feasible in the next time instant. Each velocity pair defines a circular arc. DWA calculates a cost for each arc based on how closely it matches the global plan and how close it gets to any obstacles.

A RL planner generates a state via a local cost map produced by the obstacle detection unit 104 and a waypoint calculated from the global path. For example, the RL planner may be previously trained to output the velocity pairs (v,w) based on the local cost map, as described in Khaled Nakhleh et. al. "SACPlanner: Real-World Collision Avoidance with a Soft Actor Critic Local Planner and Polar State Representations", the contents of which are incorporated herein by reference. The local cost map will be described in more detail later with regard to FIG. 3.

According to some example embodiments, both the traditional local planner and the RL local planner may be run simultaneously (e.g., continuously). In this case, both of the traditional local planner and the RL local planner may generate the velocity pair (v,w), and the robot 100 may choose which velocity pair to use based on the determined local planner.

According to some other example embodiments, only one of the traditional local planner or the RL local planner may generate the velocity pair (v,w) at a given time, in response to the determined local planner.

In some example embodiments, the traditional local planner and/or the RL local planner may be implemented at the external device 106. In this case, S210 may be performed by the external device 106 and the velocity pair may be transmitted to the robot 100 via the communication interface 103. The robot 100 then instructs the propulsion unit 105 to control the motion of (e.g., navigate) the robot 100 according to the velocity pair (v,w).

Therefore, according to example embodiments, a robot 100 may employ a hybrid local planner by dynamically determining to use the RL local planner in a situation where more precise obstacle avoidance is necessary and determining to use the traditional local planner in a situation where such precision in obstacle avoidance is not necessary. Accordingly, a robot 100 according to example embodiments may have an increased level of obstacle avoidance while also maintaining an increased level of smooth navigation.

FIG. 3 is a flowchart illustrating a method according to example embodiments. The method shown in FIG. 3 may be performed at the robot 100 to determine a local planner to use.

Referring to FIG. 3, at S205_00 the robot 100 generates a local cost map. The local cost map may correspond with an area immediately adjacent to the robot 100. For example, the local cost map may correspond with an 8 meter by 8 meter area surrounding the robot 100. However, example embodiments are not limited thereto and the local cost map may correspond with any size area adjacent to the robot 100. The local cost map may represent a portion of the global cost map.

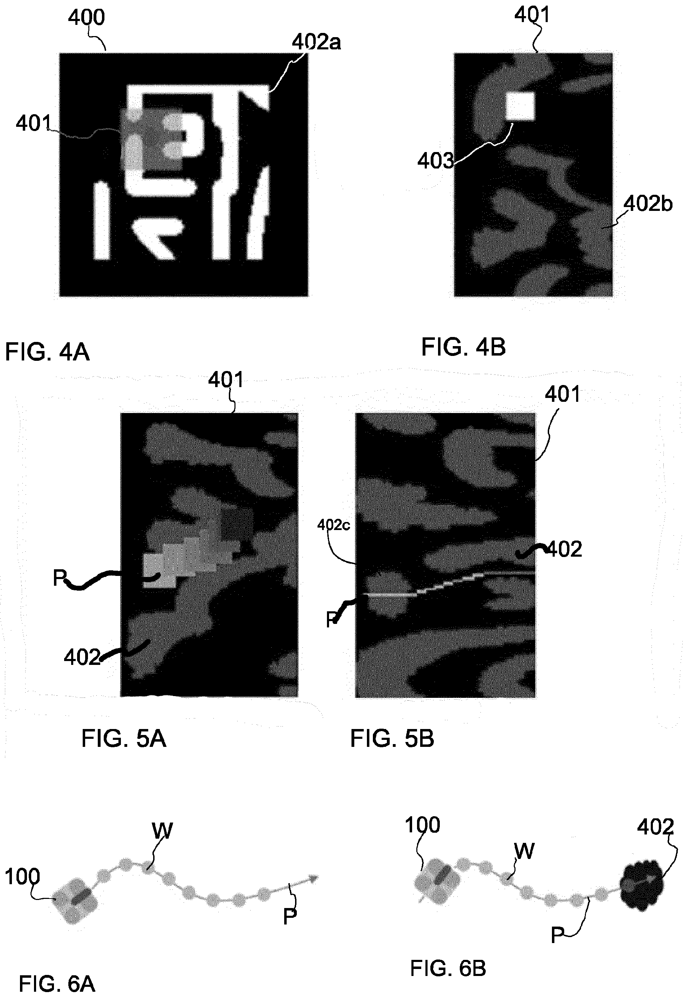

FIG. 4A is an example of a global cost map according to example embodiments.

Referring to FIG. 4A, the robot 100 may have access to the global cost map 400. For example, the global cost map 400 may be stored in the memory 102. The global cost map 400 may be a cartesian map of known or fixed obstacles 402a from at least a start position of the robot 100 to a goal. The local cost map 401 may be contained within the global cost map 400.

FIG. 4B is an example of a local cost map according to example embodiments.

Referring to FIG. 4B, the local cost map 401 may be a polar map including obstacles 402b. Obstacles 402b may include the obstacles 402a of the global cost map 400 within the area of the local cost map 401. Additionally, the obstacles 402b may include temporary and/or unexpected obstacles not included in the global cost map 400. For example, the obstacles 402b may include a person, a misplaced object, an object newly added after the known map of fixed obstacles, that the global cost map 401 is based on, was generated, etc.

The robot 100 may generate the local cost map 401 by capturing, via the obstacle detection unit 104, a cartesian map of obstacles adjacent to the robot. For example, the robot 100 may use lidar, odometry, and/or IMU sensors, etc., to detect obstacles in an 8 meter by 8 meter area surrounding the robot. The robot 100 may convert the cartesian map to a polar map according to any known methods. For example, a horizontal axis of the cartesian map represents a look ahead distance (e.g., 4 meters in a case of an 8 meter by 8 meter cost map with the robot 100 at the center). The vertical axis matches to -\pi (radian) to \pi (radian) from top to bottom direction assuming robot's current facing yaw is in the middle 0 of the vertical axis.

As shown in FIG. 4B, the local cost map 401 may include at least one next k waypoint W.

Returning to FIG. 3, at S205_05 the robot 100 determines whether the next k waypoints are clear.

The robot 100 uses the next k waypoints W generated on the local cost map 401 and creates a piecewise linear trajectory to generate an approximate path the robot would follow if there were no dynamic obstacles in the environment. An example of the approximate path is shown in FIGS. 5A-5B.

FIG. 5A illustrates an example of an approximate path P generated using a weighted-box based approach (e.g., a block based approach). In a weighted-box based approach, as shown in FIG. 5A, the approximate path P is represented as a series of boxes. In this way, an obstacle 402 may be determined to be in a same position as the approximate path P if the obstacle 402 is within a certain distance from the path P. For example, the boxes may be 6 inches wide or a foot wide. Therefore, the obstacle may be determined to be in the same position as the path P if the obstacle 402 is within 6 inches or 1 foot of the approximate path P.

FIG. 5B illustrates an example of an approximate path P generated by a piecewise linear concatenation of k waypoints. The area of the piecewise linear concatenation may be a subset of the weighted-box based approach, but approximation has less (e.g., much less) chance to be blocked by fixed obstacles from known map since the waypoints are already in certain distance from the fixed/static obstacles chosen as a subset of global path known from the global cost map. For example, the approximate path P would need to contact an obstacle 402 for the obstacle 402 to be in a same position as the approximate path P. The beginning of the path P crossing obstacle 402c (an obstacle 402 which is not from the known map) is determined to be blocked.

FIG. 6A illustrates a clear approximate path and FIG. 6B illustrates a blocked approximate path using a piecewise linear method according to example embodiments.

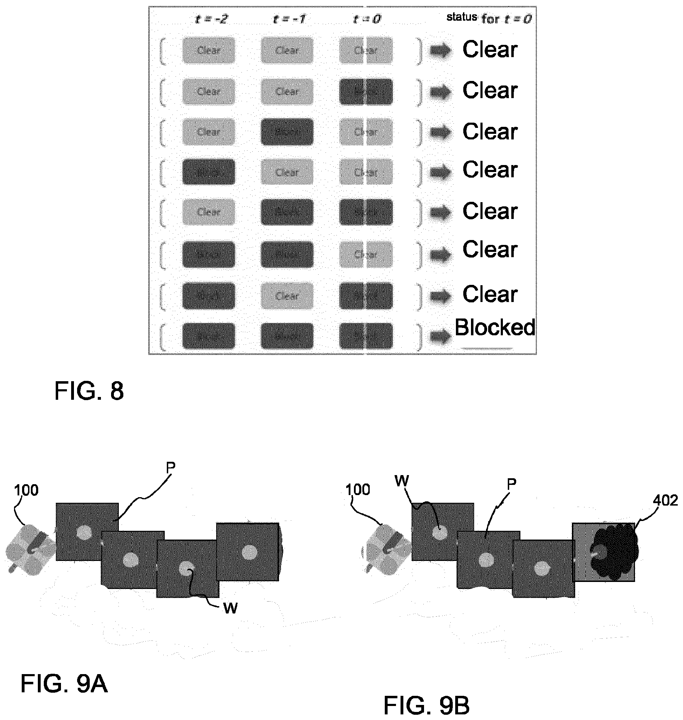

FIG. 9A illustrates a clear approximate path and FIG. 9B illustrates a blocked approximate path using a weighted-box based method according to example embodiments.

Referring to FIGS. 6A-6B, the robot 100 generates the approximate path P through the next k waypoints W.

Referring to FIGS. 9A-9B, the robot 100 generates the approximate path P through the next k waypoints W as weighted boxes.

If no portion of the approximate path is in a same position as (or within a certain distance of) an obstacle 402, as shown in FIGS. 6A and 9A, then the robot 100 determines that the next k waypoints W are clear (e.g., determines a path clearance status as clear) (Y at S205_05). The method then proceeds to S205_10.

At S205_10, the robot 100 determines to obtain the velocity pair (v,w) from the traditional local planner. The method then proceeds to S210 and continues as described herein.

Returning to S205_05, if any portion of the approximate path is in a same position as (or within a certain distance of) an obstacle 402, as shown in FIGS. 6B and 9B, then the robot 100 determines that the next k waypoints W are not clear (e.g., determines a path clearance status as blocked) (N at S205_05). The method then proceeds to S205_15.

At S205_15, the robot 100 determines to obtain the velocity pair (v,w) from the RL local planner. The method then proceeds to S210 and continues as described herein.

If a waypoint W of the next k waypoints W is outside of the area encompassed by the local cost map 401, then the robot 100 may determine such a waypoint W as being not in a same position as an obstacle.

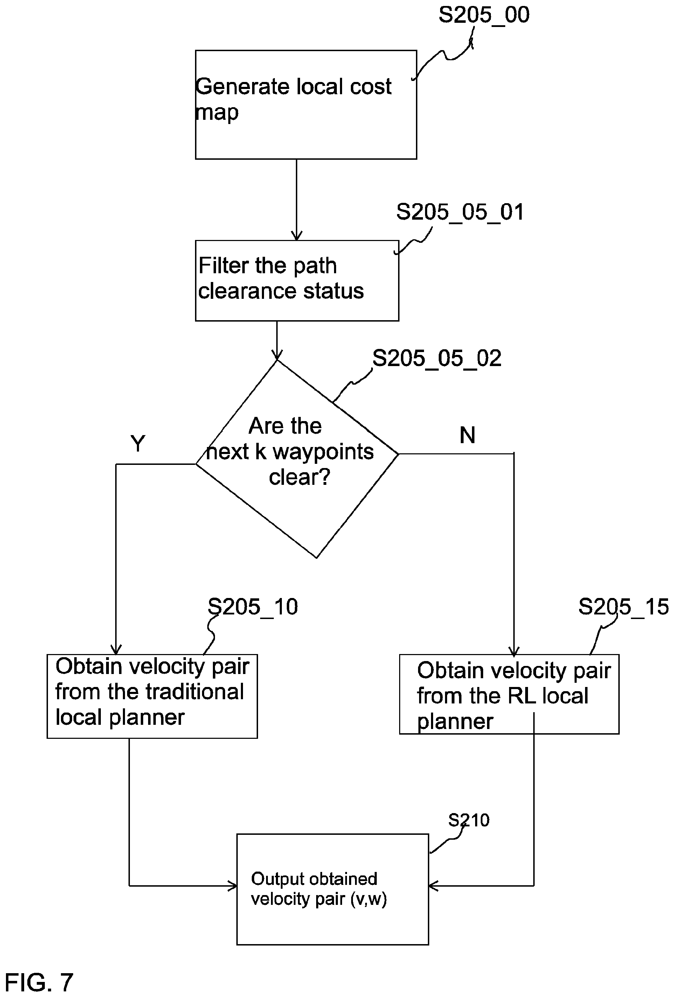

FIG. 7 is a flowchart illustrating a method according to example embodiments. The method shown in FIG. 7 may be performed at the robot 100 to determine a local planner to use. The steps shown in FIG. 7 may be the same as those in FIG. 3, except step S205_05 is replaced by steps S205_05_01 and S205_05_02. To avoid repeated disclosure, only these steps will be described.

Referring to FIG. 7, at S205_05_01, the robot 100 filters the path clearance statuses.

The method shown in FIG. 2 may be performed by the robot 100 multiple times per second (e.g., 5 times per second). Thus, noise in the sensor data could result in the robot 100 rapidly flip-flopping between the traditional local planner and the RL local planner if only the latest clearance status is used for planner selection. According to some example embodiments, the robot 100 may determine the local planner after filtering the path clearance status for noise from the sensors.

To filter the path clearance statuses, the robot 100 may keep track of a number n of previous path clearance statuses. The method for determining the path clearance status is described above at step S205_05. For ease of illustration, example embodiments will use n=3 path clearance statuses. However, example embodiments are not limited thereto and more or fewer path clearance statuses may be used.

FIG. 8 illustrates a table showing possible results of a path clearance status filter according to example embodiments.

Referring to FIG. 8, all possible results are shown for determination of path clearance for times t=-2, t=-1, and t=0. For example, t=0 may represent a current path clearance status, t=-1 may represent a last path clearance status, and t=-2 may represent a path clearance status immediately prior to t=-1.

For example, the first row shown in FIG. 8 indicates a case where all of t=-2, t=-1, and t=0 were determined as being a clear path. The fourth row in FIG. 8 indicates a case where t=-2 was determined as a blocked path, and t=-1 and t=0 were determined as a clear path. The last row indicates a case where all of t=-2, t=-1, and t=0 were determined as a blocked path.

Returning to FIG. 7, at S205_05_02, the robot 100 may determine whether the next k waypoints W are clear based on the filtered local cost map. For example, the robot 100 may determine that the next k waypoints W are clear in response to a number of clear statuses of the previous n path clearance statuses being equal to or above a threshold τ.

For example, as shown in FIG. 8, the threshold τ may be equal to 1. Therefore, as shown in FIG 8, if any of the previous 3 clear statuses is clear, the robot 100 may determine that the next k waypoints W are clear. If all of the previous 3 clear statuses are blocked, as shown in the last row, then the robot 100 may determine that the next k waypoints W are blocked. However, example embodiments are not limited thereto and the threshold τ may be any number between 1 and n.

Returning to S205_05_02, if the number of clear statuses of the previous n path clearance statuses is equal to or above a threshold τ, the robot 100 determines that the next k pathways are clear (Y at S205_05_02) and the method proceeds to S205_10 and proceeds as described herein.

Returning to S205_05_02, if the number of clear statuses of the previous n path clearance statuses is less than the threshold τ, the robot 100 determines that the next k pathways are not clear (N at S205_05_02) and the method proceeds to S205_15 and proceeds as described herein.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment, base stations, eNBs, RRHs, gNBs, femto base stations, network controllers, computers, or the like. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be rearranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, user equipment, base stations, eNBs, RRHs, gNBs, femto base stations, network controllers, computers, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

## Claims

1. A method for navigating a robot (100), the method comprising:
generating a set of next consecutive waypoints;
determining a local planner based on the set of next consecutive waypoints;
outputting a velocity pair for navigating the robot, based on the determined local planner;
**characterised by**
determining a plurality of path clearance statuses based on the set of next consecutive waypoints:
filtering the plurality of path clearance statuses, and
wherein the determining the local planner is also based on the filtered path clearance statuses.

2. The method of claim 1, further comprising:
generating a local cost map, and
wherein the determining the local planner is further based on the local cost map.

3. The method of claim 1, wherein the determining the local planner includes:
determining to use a traditional local planner in response to all consecutive waypoints in the set of next consecutive waypoints being clear; and
determining to use a reinforcement learning (RL) local planner in response to at least one consecutive waypoint in the set of next consecutive waypoints not being clear.

4. The method of claim 3, further comprising:
generating an approximate path based on a global path and the set of next consecutive waypoints; and
determining whether all consecutive waypoints in the set of next consecutive waypoints are clear in response to no waypoint in the set of next consecutive waypoints being in a same position as an obstacle, based on a local cost map.

5. The method of claim 1, wherein the generating the set of next consecutive waypoints includes:
discretizing a global path to generate discrete waypoints; and
choosing, as the set of next consecutive waypoints, a number of next discrete waypoints from a current position of the robot (100) on the global path.

6. The method of claim 5, wherein the choosing includes:
determining, among the discrete waypoints, a first waypoint, after a closest waypoint to the current position of the robot (100); and wherein
the choosing chooses the number of next discrete waypoints starting from the first waypoint.

7. A mobile robot (100) comprising:
at least one processor (101); and
at least one memory (102) storing instructions that, when executed by the at least one processor, cause the mobile robot to
generate a set of next consecutive waypoints,
determine a local planner based on the set of next consecutive waypoints,
output a velocity pair for navigating the mobile robot, based on the determined local planner;
**characterised in that** the robot (100) is caused to determine a plurality of path clearance statuses based on the set of next consecutive waypoints; filter the plurality of path clearance statuses; and
determine the local planner based also on the filtered path clearance statuses.

8. The mobile robot (100) of claim 7, wherein the at least one memory (102) stores instructions that, when executed by the at least one processor (101), cause the mobile robot to:
generate a local cost map; and
determine the local planner further based on the local cost map.

9. The mobile robot (100) of claim 7, wherein the at least one memory (102) stores instructions that, when executed by the at least one processor (101), cause the mobile robot to:
determine to use a traditional local planner in response to all consecutive waypoints in the set of next consecutive waypoints being clear; and
determine to use a reinforcement learning (RL) local planner in response to at least one consecutive waypoint in the set of next consecutive waypoints not being clear.

10. The mobile robot (100) of claim 9, wherein the at least one memory (102) stores instructions that, when executed by the at least one processor (101), cause the mobile robot to:
generate an approximate path based on a global path and the next consecutive waypoints; and
determine whether all consecutive waypoints in the set of next consecutive waypoints are clear in response to no waypoint in the set of next consecutive waypoints being in a same position as an obstacle, based on a local cost map.

11. The mobile robot (100) of claim 7, wherein the at least one memory (102) stores instructions that, when executed by the at least one processor (101), cause the mobile robot to:
discretize a global path to generate discrete waypoints; and
choose, as the set of next consecutive waypoints, a number of next discrete waypoints from a current position of the robot on the global path.

12. The mobile robot (100) of claim 11, wherein the at least one memory (102) stores instructions that, when executed by the at least one processor (101), cause the apparatus to:
determine, among the discrete waypoints, a first waypoint, after a closest waypoint to the current position of the robot; and
choose the number of next discrete waypoints starting from the first waypoint.

13. A non-transitory computer readable storage medium storing computer executable instructions that, when executed at a mobile robot (100), cause the mobile robot to perform a method for navigating the mobile robot, the method comprising:
generating a set of next consecutive waypoints;
determining a local planner based on the set of next consecutive waypoints;
outputting a velocity pair for navigating the robot, based on the determined local planner;
**characterised by** determining to use as the local planner
a traditional local planner in response to all consecutive waypoints in the set of next consecutive waypoints being clear; and
determining to use as the local planner a reinforcement learning (RL) local planner in response to at least one consecutive waypoint in the set of next consecutive waypoints not being clear.

## Patentansprüche

1. Verfahren zum Navigieren eines Roboters (100), wobei das Verfahren umfasst:
Erzeugen eines Satzes von nächsten aufeinanderfolgenden Wegpunkten;
Bestimmen eines lokalen Planers auf der Grundlage des Satzes von nächsten aufeinanderfolgenden Wegpunkten;
Ausgeben eines Geschwindigkeitspaares zum Navigieren des Roboters, auf der Grundlage des bestimmten lokalen Planers;
**gekennzeichnet durch**
Bestimmen einer Vielzahl von Wegfreigabestatussen auf der Grundlage des Satzes von nächsten aufeinanderfolgenden Wegpunkten:
Filtern der Vielzahl von Wegfreigabestatussen, und
wobei das Bestimmen des lokalen Planers auch auf den gefilterten Wegfreigabestatussen basiert.

2. Verfahren nach Anspruch 1, ferner umfassend:
Erzeugen einer lokalen Kostenkarte, und
wobei das Bestimmen des lokalen Planers ferner auf der lokalen Kostenkarte basiert.

3. Verfahren nach Anspruch 1, wobei das Bestimmen des lokalen Planers umfasst:
Bestimmen, einen traditionellen lokalen Planer zu verwenden, als Reaktion darauf, dass alle aufeinanderfolgenden Wegpunkte in dem Satz von nächsten aufeinanderfolgenden Wegpunkten frei sind; und
Bestimmen, einen lokalen Planer mit verstärkendem Lernen (RL) zu verwenden, als Reaktion darauf, dass mindestens ein aufeinanderfolgender Wegpunkt in dem Satz von nächsten aufeinanderfolgenden Wegpunkten nicht frei ist.

4. Verfahren nach Anspruch 3, ferner umfassend:
Erzeugen eines angenäherten Weges auf der Grundlage eines globalen Weges und des Satzes von nächsten aufeinanderfolgenden Wegpunkten; und
Bestimmen, ob alle aufeinanderfolgenden Wegpunkte in dem Satz von nächsten aufeinanderfolgenden Wegpunkten frei sind, als Reaktion darauf, dass sich kein Wegpunkt in dem Satz von nächsten aufeinanderfolgenden Wegpunkten in derselben Position wie ein Hindernis befindet, auf der Grundlage einer lokalen Kostenkarte.

5. Verfahren nach Anspruch 1, wobei das Erzeugen des Satzes von nächsten aufeinanderfolgenden Wegpunkten umfasst:
Diskretisieren eines globalen Weges zum Erzeugen diskreter Wegpunkte; und
Auswählen, als Satz von nächsten aufeinanderfolgenden Wegpunkten, einer Anzahl von nächsten diskreten Wegpunkten von einer aktuellen Position des Roboters (100) auf dem globalen Weg.

6. Verfahren nach Anspruch 5, wobei das Auswählen umfasst:
Bestimmen, unter den diskreten Wegpunkten, eines ersten Wegpunktes, nach einem der aktuellen Position des Roboters (100) nächstgelegenen Wegpunkt; und wobei
das Auswählen die Anzahl von nächsten diskreten Wegpunkten beginnend mit dem ersten Wegpunkt auswählt.

7. Mobiler Roboter (100), umfassend:
mindestens einen Prozessor (101); und
mindestens einen Speicher (102), der Anweisungen speichert, die, wenn sie von dem mindestens einen Prozessor ausgeführt werden, den mobilen Roboter veranlassen,
einen Satz von nächsten aufeinanderfolgenden Wegpunkten zu erzeugen, einen lokalen Planer auf der Grundlage des Satzes von nächsten aufeinanderfolgenden Wegpunkten zu bestimmen,
ein Geschwindigkeitspaar zum Navigieren des mobilen Roboters auf der Grundlage des bestimmten lokalen Planers auszugeben;
**dadurch gekennzeichnet, dass** der Roboter (100) veranlasst wird, eine Vielzahl von Wegfreigabestatussen auf der Grundlage des Satzes von nächsten aufeinanderfolgenden Wegpunkten zu bestimmen: die Vielzahl von Wegfreigabestatussen zu filtern; und
den lokalen Planer auch auf der Grundlage der gefilterten Wegfreigabestatussen zu bestimmen.

8. Mobiler Roboter (100) nach Anspruch 7, wobei der mindestens eine Speicher (102) Anweisungen speichert, die, wenn sie von dem mindestens einen Prozessor (101) ausgeführt werden, den mobilen Roboter veranlassen:
eine lokale Kostenkarte zu erzeugen; und
den lokalen Planer ferner auf der Grundlage der lokalen Kostenkarte zu bestimmen.

9. Mobiler Roboter (100) nach Anspruch 7, wobei der mindestens eine Speicher (102) Anweisungen speichert, die, wenn sie von dem mindestens einen Prozessor (101) ausgeführt werden, den mobilen Roboter veranlassen:
zu bestimmen, einen traditionellen lokalen Planer zu verwenden, als Reaktion darauf, dass alle aufeinanderfolgenden Wegpunkte in dem Satz von nächsten aufeinanderfolgenden Wegpunkten frei sind; und
zu bestimmen, einen lokalen Planer mit verstärkendem Lernen (RL) zu verwenden, als Reaktion darauf, dass mindestens ein aufeinanderfolgender Wegpunkt in dem Satz von nächsten aufeinanderfolgenden Wegpunkten nicht frei ist.

10. Mobiler Roboter (100) nach Anspruch 9, wobei der mindestens eine Speicher (102) Anweisungen speichert, die, wenn sie von dem mindestens einen Prozessor (101) ausgeführt werden, den mobilen Roboter veranlassen:
einen angenäherten Weg auf der Grundlage eines globalen Weges und der nächsten aufeinanderfolgenden Wegpunkte zu erzeugen; und
zu bestimmen, ob alle aufeinanderfolgenden Wegpunkte in dem Satz von nächsten aufeinanderfolgenden Wegpunkten frei sind, als Reaktion darauf, dass sich kein Wegpunkt in dem Satz von nächsten aufeinanderfolgenden Wegpunkten in derselben Position wie ein Hindernis befindet, auf der Grundlage einer lokalen Kostenkarte.

11. Mobiler Roboter (100) nach Anspruch 7, wobei der mindestens eine Speicher (102) Anweisungen speichert, die, wenn sie von dem mindestens einen Prozessor (101) ausgeführt werden, den mobilen Roboter veranlassen:
einen globalen Weg zu diskretisieren, um diskrete Wegpunkte zu erzeugen; und
als Satz von nächsten aufeinanderfolgenden Wegpunkten eine Anzahl von nächsten diskreten Wegpunkten von einer aktuellen Position des Roboters auf dem globalen Weg auszuwählen.

12. Mobiler Roboter (100) nach Anspruch 11, wobei der mindestens eine Speicher (102) Anweisungen speichert, die, wenn sie von dem mindestens einen Prozessor (101) ausgeführt werden, die Vorrichtung veranlassen:
unter den diskreten Wegpunkten einen ersten Wegpunkt nach einem der aktuellen Position des Roboters nächstgelegenen Wegpunkt zu bestimmen; und
die Anzahl von nächsten diskreten Wegpunkten beginnend mit dem ersten Wegpunkt auszuwählen.

13. Nicht-transitorisches computerlesbares Speichermedium, das computerausführbare Anweisungen speichert, die, wenn sie an einem mobilen Roboter (100) ausgeführt werden, den mobilen Roboter veranlassen, ein Verfahren zum Navigieren des mobilen Roboters auszuführen, wobei das Verfahren umfasst:
Erzeugen eines Satzes von nächsten aufeinanderfolgenden Wegpunkten;
Bestimmen eines lokalen Planers auf der Grundlage des Satzes von nächsten aufeinanderfolgenden Wegpunkten;
Ausgeben eines Geschwindigkeitspaares zum Navigieren des Roboters, auf der Grundlage des bestimmten lokalen Planers;
**gekennzeichnet durch** Bestimmen, als lokaler Planer, einen traditionellen lokalen Planer zu verwenden, als Reaktion darauf, dass alle aufeinanderfolgenden Wegpunkte in dem Satz von nächsten aufeinanderfolgenden Wegpunkten frei sind; und
Bestimmen, als lokaler Planer, einen lokalen Planer mit verstärkendem Lernen (RL) zu verwenden, als Reaktion darauf, dass mindestens ein aufeinanderfolgender Wegpunkt in dem Satz von nächsten aufeinanderfolgenden Wegpunkten nicht frei ist.

## Revendications

1. Procédé de navigation d'un robot (100), le procédé comprenant :
la génération d'un ensemble de points de cheminement consécutifs suivants ;
la détermination d'un planificateur local sur la base de l'ensemble de points de cheminement consécutifs suivants ;
la délivrance en sortie d'une paire de vitesses pour la navigation du robot, sur la base du planificateur local déterminé ;
**caractérisé par** la détermination d'une pluralité de statuts de dégagement de chemin sur la base de l'ensemble de points de cheminement consécutifs suivants :
le filtrage de la pluralité de statuts de dégagement de chemin, et
dans lequel la détermination du planificateur local est également basée sur les statuts de dégagement de chemin filtrés.

2. Procédé selon la revendication 1, comprenant en outre :
la génération d'une carte de coût locale, et
dans lequel la détermination du planificateur local est en outre basée sur la carte de coût locale.

3. Procédé selon la revendication 1, dans lequel la détermination du planificateur local comprend :
la détermination d'utiliser un planificateur local traditionnel en réponse au fait que tous les points de cheminement consécutifs dans l'ensemble de points de cheminement consécutifs suivants sont dégagés ; et
la détermination d'utiliser un planificateur local à apprentissage par renforcement (RL) en réponse au fait qu'au moins un point de cheminement consécutif dans l'ensemble de points de cheminement consécutifs suivants n'est pas dégagé.

4. Procédé selon la revendication 3, comprenant en outre :
la génération d'un chemin approximatif sur la base d'un chemin global et de l'ensemble de points de cheminement consécutifs suivants ; et
la détermination du fait que tous les points de cheminement consécutifs dans l'ensemble de points de cheminement consécutifs suivants sont dégagés en réponse à l'absence de point de cheminement dans l'ensemble de points de cheminement consécutifs suivants se trouvant dans une même position qu'un obstacle, sur la base d'une carte de coût locale.

5. Procédé selon la revendication 1, dans lequel la génération de l'ensemble de points de cheminement consécutifs suivants comprend :
la discrétisation d'un chemin global pour générer des points de cheminement discrets ; et
le choix, en tant qu'ensemble de points de cheminement consécutifs suivants, d'un nombre de points de cheminement discrets suivants à partir d'une position actuelle du robot (100) sur le chemin global.

6. Procédé selon la revendication 5, dans lequel le choix comprend :
la détermination, parmi les points de cheminement discrets, d'un premier point de cheminement, après un point de cheminement le plus proche de la position actuelle du robot (100) ; et dans lequel
le choix choisit le nombre de points de cheminement discrets suivants en commençant par le premier point de cheminement.

7. Robot mobile (100) comprenant :
au moins un processeur (101) ; et
au moins une mémoire (102) stockant des instructions qui, lorsqu'elles sont exécutées par l'au moins un processeur, amènent le robot mobile à générer un ensemble de points de cheminement consécutifs suivants, déterminer un planificateur local sur la base de l'ensemble de points de cheminement consécutifs suivants, délivrer en sortie une paire de vitesses pour la navigation du robot mobile, sur la base du planificateur local déterminé ;
**caractérisé en ce que** le robot (100) est amené à déterminer une pluralité de statuts de dégagement de chemin sur la base de l'ensemble de points de cheminement consécutifs suivants :
filtrer la pluralité de statuts de dégagement de chemin ; et
déterminer le planificateur local également sur la base des statuts de dégagement de chemin filtrés.

8. Robot mobile (100) selon la revendication 7, dans lequel l'au moins une mémoire (102) stocke des instructions qui, lorsqu'elles sont exécutées par l'au moins un processeur (101), amènent le robot mobile à :
générer une carte de coût locale ; et
déterminer le planificateur local en outre sur la base de la carte de coût locale.

9. Robot mobile (100) selon la revendication 7, dans lequel l'au moins une mémoire (102) stocke des instructions qui, lorsqu'elles sont exécutées par l'au moins un processeur (101), amènent le robot mobile à :
déterminer d'utiliser un planificateur local traditionnel en réponse au fait que tous les points de cheminement consécutifs dans l'ensemble de points de cheminement consécutifs suivants sont dégagés ; et
déterminer d'utiliser un planificateur local à apprentissage par renforcement (RL) en réponse au fait qu'au moins un point de cheminement consécutif dans l'ensemble de points de cheminement consécutifs suivants n'est pas dégagé.

10. Robot mobile (100) selon la revendication 9, dans lequel l'au moins une mémoire (102) stocke des instructions qui, lorsqu'elles sont exécutées par l'au moins un processeur (101), amènent le robot mobile à :
générer un chemin approximatif sur la base d'un chemin global et des points de cheminement consécutifs suivants ; et
déterminer si tous les points de cheminement consécutifs dans l'ensemble de points de cheminement consécutifs suivants sont dégagés en réponse à l'absence de point de cheminement dans l'ensemble de points de cheminement consécutifs suivants se trouvant dans une même position qu'un obstacle, sur la base d'une carte de coût locale.

11. Robot mobile (100) selon la revendication 7, dans lequel l'au moins une mémoire (102) stocke des instructions qui, lorsqu'elles sont exécutées par l'au moins un processeur (101), amènent le robot mobile à :
discrétiser un chemin global pour générer des points de cheminement discrets ; et
choisir, en tant qu'ensemble de points de cheminement consécutifs suivants, un nombre de points de cheminement discrets suivants à partir d'une position actuelle du robot sur le chemin global.

12. Robot mobile (100) selon la revendication 11, dans lequel l'au moins une mémoire (102) stocke des instructions qui, lorsqu'elles sont exécutées par l'au moins un processeur (101), amènent l'appareil à :
déterminer, parmi les points de cheminement discrets, un premier point de cheminement, après un point de cheminement le plus proche de la position actuelle du robot ; et
choisir le nombre de points de cheminement discrets suivants en commençant par le premier point de cheminement.

13. Support de stockage lisible par ordinateur non transitoire stockant des instructions exécutables par ordinateur qui, lorsqu'elles sont exécutées au niveau d'un robot mobile (100), amènent le robot mobile à exécuter un procédé de navigation du robot mobile, le procédé comprenant :
la génération d'un ensemble de points de cheminement consécutifs suivants ;
la détermination d'un planificateur local sur la base de l'ensemble de points de cheminement consécutifs suivants ;
la délivrance en sortie d'une paire de vitesses pour la navigation du robot, sur la base du planificateur local déterminé ;
**caractérisé par** la détermination, en tant que planificateur local, d'utiliser un planificateur local traditionnel en réponse au fait que tous les points de cheminement consécutifs dans l'ensemble de points de cheminement consécutifs suivants sont dégagés ; et
la détermination, en tant que planificateur local, d'utiliser un planificateur local à apprentissage par renforcement (RL) en réponse au fait qu'au moins un point de cheminement consécutif dans l'ensemble de points de cheminement consécutifs suivants n'est pas dégagé.
